# EUROPÄISCHE PATENTANMELDUNG

(11) **EP 3 167 949 A1**
(43) Veröffentlichungstag der Anmeldung: **17.05.2017**
(21) Anmeldenummer: 15194103.6
(22) Anmeldetag: 11.11.2015
(51) Int. Cl.: B01D 46/00, B01D 46/10, B01D 46/52

(54) **MOBILES REINIGUNGSGERÄT UND VERFAHREN ZUR REINIGUNG VON RAUMLUFT UND/ODER FRISCHLUFT**

(71) Anmelder: Carl Freudenberg KG, 69469 Weinheim (DE)
(72) Erfinder: Adolph, Juergen, 64589 Stockstadt (DE); CAESAR, Thomas, Dr., 69469 Weinheim (DE); Staudenmayer, Oliver, Dr., 69469 Weinheim (DE); Schmitt, Thorsten, 69469 Weinheim (DE); Bräunling, Volker, 64646 Heppenheim (DE)

(57) **Zusammenfassung**

Ein mobiles Reinigungsgerät zur Reinigung von Raumluft und/ oder Frischluft, umfassend eine Aufnahmeeinrichtung (1) und ein Filterelement (2, 2'), welches einen partikelfilternden Bereich (3, 3') und einen gasadsorbierenden Bereich (4, 4') aufweist, wobei der partikelfilternde Bereich (3, 3') ein Filtermedium aufweist und wobei das Filterelement (2, 2') in der Aufnahmeeinrichtung (1) aufgenommen ist, um Rauch und/ oder Partikel enthaltende Raumluft und/ oder Frischluft zu reinigen, ist im Hinblick auf die Aufgabe, ein mobiles Reinigungsgerät derart auszugestalten, dass dieses möglichst effektiv partikelbelastete und/ oder rauchbelastete Raumluft und/ oder Frischluft filtert, wobei möglichst verhindert wird, dass partikelförmige, emittierte Verunreinigungen aus dem gasadsorbierenden Bereich in einen Raum abgegeben werden, dadurch gekennzeichnet, dass der partikelfilternde Bereich (3, 3') einer Abströmseite (5) der Aufnahmeeinrichtung (1) zugewandt ist und dass der gasadsorbierende Bereich (4, 4') einer Anströmseite (6) zugewandt ist, der mit Partikeln und/ oder Rauch beladene Raumluft und/ oder Frischluft zuleitbar ist.

## Beschreibung

### Technisches Gebiet

Die Erfindung betrifft ein mobiles Reinigungsgerät zur Reinigung von Raumluft und/ oder Frischluft gemäß dem Oberbegriff des Patentanspruchs 1 und ein Verfahren zur Reinigung von Raumluft und/ oder Frischluft.

### Stand der Technik

Filterelemente, die als sogenannte Kombifilter ausgestaltet sind, sind bereits bekannt. Diese weisen mindestens einen partikelfilternden Bereich und einen gasadsorbierenden Bereich auf. Ein solches Filterelement ist aus der DE 20 2008 000 380 U1 bekannt geworden.

Weiter ist in der DE 103 24 341 B3 eine Filteranordnung zum Reinigen eines durchströmenden fluiden Mediums, insbesondere der einer Fahrgastzelle eines Kraftfahrzeugs zugeführten Luft, beschrieben, welche eine Partikel- und eine Adsorptionsfiltereinheit umfasst.

Das Adsorptionsmaterial eines gasadsorbierenden Bereichs kann Aktivkohle oder Zeolithe aufweisen. Eine partikelfilternde Lage ist häufig aus Vliesstoff gefertigt. Der Vliesstoff dient der Partikelfilterung und kann elektrostatisch aufgeladen sein.

Es ist auch bereits bekannt, Kombifilter in mobilen Reinigungsgeräten einzusetzen, wobei die mobilen Reinigungsgeräte beispielsweise in Gebäuden örtlich veränderbar aufstellbar sind.

Ein mobiles Reinigungsgerät kann aufgrund seines mobilen und örtlich unterschiedlichen Einsatzes Erschütterungen und Vibrationen unterliegen, die dessen Filtereffizienz beeinflussen können.

### Darstellung der Erfindung

Der Erfindung liegt daher die Aufgabe zugrunde, ein mobiles Reinigungsgerät derart auszugestalten, dass dieses möglichst effektiv partikelbelastete und/ oder rauchbelastete Raumluft und/ oder Frischluft filtert, wobei möglichst verhindert wird, dass partikelförmige, emittierte Verunreinigungen aus dem gasadsorbierenden Bereich in einen Raum abgegeben werden.

Die vorliegende Erfindung löst die zuvor genannte Aufgabe durch die Merkmale der unabhängigen Patentansprüche.

Erfindungsgemäß ist erkannt worden, dass vom gasadsorbierenden Bereich emittierte partikuläre Stoffe nahezu nicht in einen abströmseitigen Raum abgegeben werden können, wenn der gasadsorbierende Bereich der Anströmseite zugewandt ist. Ein sogenanntes "Shedding" von Stoffen aus dem Adsorptionsmaterial in Richtung der Abströmseite wird wirksam weitgehend vermieden. Hierdurch wird die Filtereffizienz eines mobilen Reinigungsgeräts erheblich gesteigert, auch wenn dieses Erschütterungen ausgesetzt ist, die zu einem "Shedding" führen können.

Folglich ist die eingangs genannte Aufgabe gelöst.

Der partikelfilternde Bereich könnte ein elektrostatisch geladenes Filtermedium aufweisen. Filterelemente können im Laufe der Zeit ihre elektrostatische Aufladung verlieren.

Eine vorgeschaltete Lage aus Adsorptionsmaterial schützt überraschend das elektrostatisch geladene Filtermedium vor Feuchtigkeit und gasförmigen Verunreinigungen, die zur Entladung führen können.

Vor diesem Hintergrund macht der neue chinesische Standard für Raumluftreiniger "GB/T18801 China National Standard for Portable Air Cleaner" Auflagen, welche die Beladung eines Filterelements mit Zigarettenrauch betreffen. Der neue chinesische Standard für Raumluftreiniger beschreibt die Standzeit bzw. Lebenszeit eines Filterelements über eine Anzahl abgerauchter Zigaretten, denen das Filterelement im Raumluftreiniger ausgesetzt ist.

Die Reihenfolge der einzelnen Filterfunktionen, nämlich Gasadsorption und Partikelfiltration, in Durchströmungsrichtung eines Filterelements nimmt einen deutlichen Einfluss auf das Entladungsverhalten des elektrostatisch geladenen, partikelfilternden Bereichs. Überraschend hat sich herausgestellt, dass ein Effekt wesentlich geringerer Entladung unter Raucheinfluss durch geeignete Ausrichtung des Filterelements bewirkt werden kann.

Wird zuerst ein elektrostatisch geladener partikelfilternder Bereich und dann erst der gasadsorbierende Bereich von Rauch, insbesondere von Zigarettenrauch, durchströmt, so ist die Effizienz und damit die Lebensdauer des partikelfilternden Bereichs deutlich geringer als bei umgekehrter Durchströmung.

Mit Rauch beladene Raumluft und/ oder Frischluft wird einem Filterelement gezielt zugeführt, wobei ein gasadsorbierender Bereich von der Raumluft und/ oder Frischluft durchströmt wird und wobei anschließend ein elektrostatisch geladener, partikelfilternder Bereich von der Raumluft und/ oder Frischluft durchströmt wird.

Konkret wird durch eine geeignete Ausrichtung des Filterelements bei einer Anwendung, in der Rauch gefiltert werden muss, der elektrostatisch geladene, partikelfilternde Bereich durch den gasadsorbierenden Bereich vor Rauch geschützt und entlädt sich damit deutlich weniger als bei umgekehrter Durchströmung. Insoweit ist eine Reinigung von rauchbelasteter Raumluft über einen längeren Zeitraum sichergestellt.

Der partikelfilternde Bereich könnte mindestens eine Lage aufweisen und/ oder der gasadsorbierende Bereich könnte ebenfalls mindestens eine Lage aufweisen. Lagen lassen sich leicht miteinander kombinieren und gemeinsam in Falten legen. Es ist konkret denkbar, dass der partikelfilternde Bereich mehrere Lagen, bevorzugt zwei oder drei Lagen aus synthetischem Vliesstoff, aufweist.

Es ist auch denkbar, Lagen des partikelfilternden Bereichs aus Papier oder Glasfasern zu fertigen. Eine Lage kann auch als Membran ausgestaltet sein.

Das Filtermedium könnte einen Vliesstoff aufweisen oder als Vliesstoff ausgestaltet sein. Vliesstoffe aus synthetischen Fasern lassen sich leicht elektrostatisch aufladen und in Falten legen. Bevorzugt ist der Vliesstoff durch ein Melt-Blown-Verfahren hergestellt und elektrostatisch aufgeladen.

Der gasadsorbierende Bereich könnte Aktivkohle aufweisen. Aktivkohle eignet sich besonders gut für die Rauchadsorption. Überraschend schützt eine Aktivkohleschicht ein elektrostatisch geladenes Filtermedium vor Entladung in erheblichem Maße. Durch eine vorgeschaltete Aktivkohleschicht, entweder in Pelletform in einem Wabenfilter vor einem Partikelfiltermedium, welches bevorzugt gefaltet ist, oder in einem Kombifilter, wobei die Aktivkohle bevorzugt als Granulat ins Filtermedium eingebunden ist, kann eine höhere Standzeit erreicht werden.

Der gasadsorbierende Bereich könnte in Wabenform ausgebildet sein. Eine Wabenform stellt eine Vielzahl von runden, ovalen oder eckigen Kanälen und/ oder Kammern zur Aufnahme von Pellets aus Aktivkohle bereit. Die Wände der Kanäle und/ oder Kammern können aus Aktivkohle gefertigt sein. Bevorzugt sind die Wände extrudiert.

Das mobile Reinigungsgerät könnte als Kraftfahrzeug ausgestaltet sein oder in einem Kraftfahrzeug angeordnet sein. Ein Kraftfahrzeug kann aufgrund der in und/ oder an ihm angeordneten Filterelemente Luft von Schadstoffen befreien.

Das mobile Reinigungsgerät der hier beschriebenen Art ist bevorzugt als tragbarer Raumluftreiniger ausgestaltet.

Das mobile Reinigungsgerät der hier beschriebenen Art kann im Umluftmodus aber auch im Zuluftmodus betrieben werden.

Eine Verwendung des hier beschriebenen mobilen Reinigungsgeräts zur Filterung von Raumluft und/ oder Frischluft, welche rauchbeladen ist, ist besonders vorteilhaft, da der eingangs beschriebene Effekt verminderter elektrischer Entladung genutzt werden kann.

Die Raumluft und/ oder Frischluft kann mit Zigarettenrauch oder mit Zigarrenrauch belastet sein. Ebenfalls kann Rauch, welcher beim Lichtbogenschneiden von organischem Gewebe entsteht, zuerst durch den gasadsorbierenden Bereich geführt werden. Auch hierbei entlädt sich der partikelfilternde Bereich deutlich weniger stark, als wenn dieser zuerst und dann erst der gasadsorbierende Bereich durchströmt würde. Bevorzugt ist daher eine Verwendung des mobilen Reinigungsgeräts bzw. eine Durchführung des Verfahrens in einem Krankenhaus möglich.

Alle Arten von Kombifiltern können zur Durchführung des hier beschriebenen Verfahrens zur Reinigung von rauchbelasteter Raumluft und/ oder Frischluft verwendet werden.

Ein Kraftfahrzeug, welches als mobiles Reinigungsgerät zur Reinigung von Luft ausgestaltet ist und hierfür mindestens ein Filterelement aufweist, kann zur Reinigung einer offenen oder abgeschlossenen Atmosphäre beitragen.

### Kurzbeschreibung der Zeichnung

In der Zeichnung zeigen
- Fig. 1: ein Reinigungsgerät in schematischer Ansicht und in Detailansicht, wobei der gasadsorbierende Bereich in Wabenform ausgestaltet ist, und
- Fig. 2: ein Reinigungsgerät in schematischer Ansicht und in Detailansicht, wobei die gasadsorbierende Lage als Aktivkohleschicht ausgestaltet ist.

### Ausführung der Erfindung

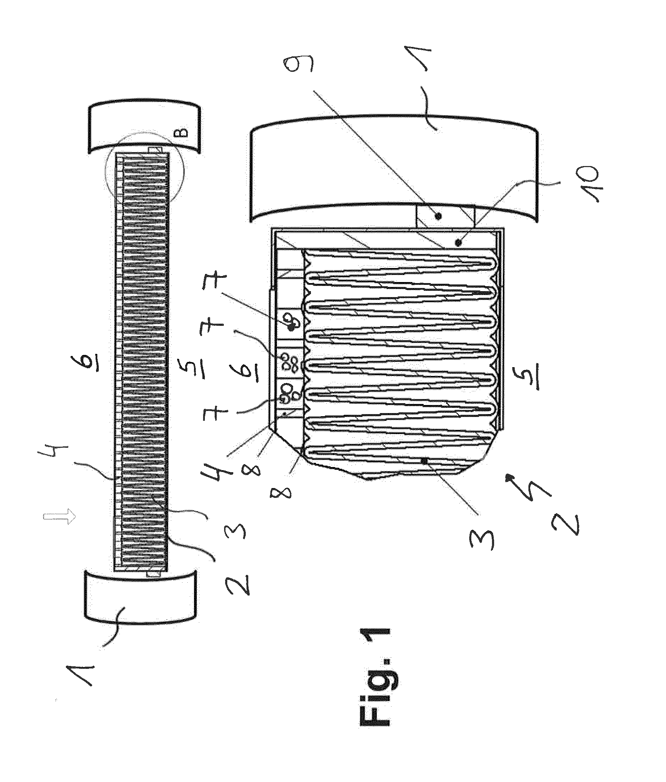

Fig. 1 zeigt ein mobiles Reinigungsgerät zur Reinigung von Raumluft und/ oder Frischluft, umfassend eine Aufnahmeeinrichtung 1 und ein Filterelement 2, welches einen partikelfilternden Bereich 3 und einen gasadsorbierenden Bereich 4 aufweist, wobei der partikelfilternde Bereich 3 ein elektrostatisch geladenes Filtermedium aufweist und wobei das Filterelement 2 in der Aufnahmeeinrichtung 1 aufgenommen ist, um Rauch und/ oder Partikel enthaltende Raumluft und/ oder Frischluft zu reinigen.

Das Reinigungsgerät ist im oberen Teil der Fig. 1 in schematischer Gesamtansicht und im unteren Teil der Fig. 1 in Detailansicht gezeigt.

Der partikelfilternde Bereich 3 ist einer Abströmseite 5 der Aufnahmeeinrichtung 1 zugewandt und der gasadsorbierende Bereich 4 ist einer Anströmseite 6 zugewandt, der mit Partikeln und/ oder Rauch beladene Raumluft und/ oder Frischluft zuleitbar ist.

Der partikelfilternde Bereich 3 weist drei Lagen auf und ist elektrostatisch geladen. Die drei Lagen sind gefaltet. Das Filtermedium, nämlich die drei Lagen, weist zumindest einen synthetischen Vliesstoff auf. In Anströmrichtung betrachtet ist die erste Lage als Vorfilter ausgestaltet, ist die zweite Lage als Mikrofaserschicht ausgestaltet und ist die dritte Lage als Abdeckschicht ausgestaltet.

Der gasadsorbierende Bereich 4 weist Aktivkohle auf. Der gasadsorbierende Bereich 4 ist in Wabenform ausgestaltet. Konkret ist der gasadsorbierende Bereich als Wabenfilter ausgebildet, in dessen Kanälen und/ oder Kammern Pellets 7 aus Aktivkohle aufgenommen sind. Die Pellets 7 werden durch Gitter 8 im Wabenfilter zurückgehalten, welche die Pellets 7 zwischen sich sandwichartig aufnehmen.

In Anströmrichtung betrachtet wird zuerst der Wabenfilter durchströmt, bevor die partikelbeladene und/ oder rauchbeladene Raumluft und/ oder Frischluft auf den partikelfilternden, elektrostatisch geladenen Bereich 3 trifft.

Am Filterelement 2 ist eine Dichtung 9 angeordnet, welche dichtend an der Aufnahmeeinrichtung 1 anliegt. Das Filterelement 2 weist des Weiteren einen Längsstreifen 10 aus Schaumstoff auf.

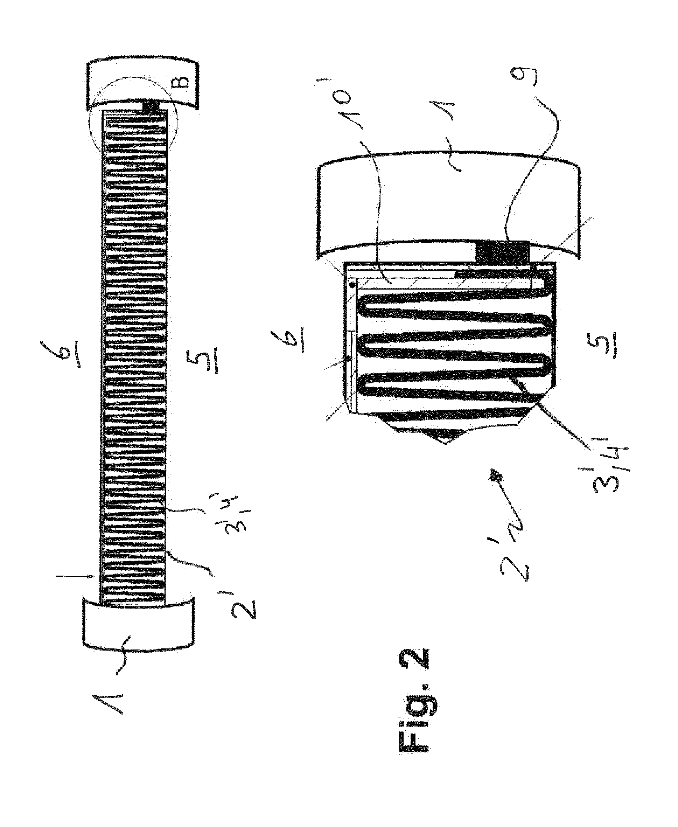

Fig. 2 zeigt ein mobiles Reinigungsgerät zur Reinigung von Raumluft und/ oder Frischluft, umfassend eine Aufnahmeeinrichtung 1 und ein Filterelement 2', welches einen partikelfilternden Bereich 3' und einen gasadsorbierenden Bereich 4' aufweist, wobei der partikelfilternde Bereich 3' ein elektrostatisch geladenes Filtermedium aufweist und wobei das Filterelement 2' in der Aufnahmeeinrichtung 1 aufgenommen ist, um Partikel und/ oder Rauch enthaltende Raumluft und/ oder Frischluft zu reinigen.

Das Reinigungsgerät ist im oberen Teil der Fig. 2 in schematischer Gesamtansicht und im unteren Teil der Fig. 2 in Detailansicht gezeigt.

Der partikelfilternde Bereich 3' ist einer Abströmseite 5 der Aufnahmeeinrichtung 1 zugewandt und der gasadsorbierende Bereich 4' ist einer Anströmseite 6 zugewandt, der mit Partikeln und/ oder Rauch beladene Raumluft und/ oder Frischluft zuleitbar ist.

Der partikelfilternde Bereich 3' weist zwei Lagen auf, welche gefaltet und elektrostatisch geladen sind. Das Filtermedium des partikelfilternden Bereichs 3' weist mindestens einen synthetischen Vliesstoff auf. In Anströmrichtung betrachtet ist die erste Lage als Mikrofaserschicht ausgestaltet und ist die zweite Lage als Vorfilter ausgestaltet.

Der gasadsorbierende Bereich 4' weist Aktivkohle auf. Der gasadsorbierende Bereich 4' weist ebenfalls eine gefaltete Lage, nämlich eine Aktivkohleschicht, auf, welche den Falten des partikelfilternden Bereichs 3' folgt und an diesem anliegt. Die Aktivkohleschicht ist mit einer Abdeckschicht versehen, damit keine Aktivkohlepartikel wegrieseln.

In Anströmrichtung betrachtet werden zuerst die Abdeckschicht und dann die Aktivkohleschicht durchströmt, bevor die partikelbeladene und/ oder rauchbeladene Raumluft und/ oder Frischluft auf den partikelfilternden, elektrostatisch geladenen Bereich 3' trifft.

Am Filterelement 2' ist eine Dichtung 9 angeordnet, welche dichtend an der Aufnahmeeinrichtung 1 anliegt. Das Filterelement 2' weist des Weiteren ein Winkelprofil 10' auf.

## Patentansprüche

1. Mobiles Reinigungsgerät zur Reinigung von Raumluft und/ oder Frischluft, umfassend eine Aufnahmeeinrichtung (1) und ein Filterelement (2, 2'), welches einen partikelfilternden Bereich (3, 3') und einen gasadsorbierenden Bereich (4, 4') aufweist, wobei der partikelfilternde Bereich (3, 3') ein Filtermedium aufweist und wobei das Filterelement (2, 2') in der Aufnahmeeinrichtung (1) aufgenommen ist, um Rauch und/ oder Partikel enthaltende Raumluft und/ oder Frischluft zu reinigen,
**dadurch gekennzeichnet, dass** der partikelfilternde Bereich (3, 3') einer Abströmseite (5) der Aufnahmeeinrichtung (1) zugewandt ist und dass der gasadsorbierende Bereich (4, 4') einer Anströmseite (6) zugewandt ist, der mit Partikeln und/ oder Rauch beladene Raumluft und/ oder Frischluft zuleitbar ist.

2. Reinigungsgerät nach Anspruch 1, **dadurch gekennzeichnet, dass** der partikelfilternde Bereich (3, 3') ein elektrostatisch geladenes Filtermedium aufweist.

3. Reinigungsgerät nach Anspruch 1 oder 2, **dadurch gekennzeichnet, dass** der partikelfilternde Bereich (3, 3') mindestens eine Lage aufweist und/ oder dass der gasadsorbierende Bereich (4, 4') mindestens eine Lage aufweist.

4. Reinigungsgerät nach einem der voranstehenden Ansprüche, **dadurch gekennzeichnet, dass** das Filtermedium einen Vliesstoff aufweist.

5. Reinigungsgerät nach einem der voranstehenden Ansprüche, **dadurch gekennzeichnet, dass** der gasadsorbierende Bereich (4, 4') Aktivkohle und/ oder Zeolithe aufweist.

6. Reinigungsgerät nach einem der voranstehenden Ansprüche, **dadurch gekennzeichnet, dass** der gasadsorbierende Bereich (4) in Wabenform ausgebildet ist.

7. Reinigungsgerät nach einem der voranstehenden Ansprüche, **gekennzeichnet durch** eine Ausgestaltung als Kraftfahrzeug oder **durch** eine Anordnung in einem Kraftfahrzeug.

8. Reinigungsgerät nach einem der Ansprüche 1 bis 6, **gekennzeichnet durch** eine Ausgestaltung als tragbarer Raumluftreiniger.

9. Verfahren zur Filterung von Raumluft und/ oder Frischluft, wobei mit Rauch beladene Raumluft und/ oder Frischluft einem Filterelement (2, 2') zugeführt wird, wobei ein gasadsorbierender Bereich (4, 4') von der Raumluft und/ oder Frischluft durchströmt wird und wobei anschließend ein elektrostatisch geladener partikelfilternder Bereich (3, 3') von der Raumluft und/ oder Frischluft durchströmt wird.

10. Verfahren nach Anspruch 9, **dadurch gekennzeichnet, dass** ein Reinigungsgerät nach einem der Ansprüche 1 bis 8 verwendet wird.

11. Kraftfahrzeug, welches als mobiles Reinigungsgerät zur Reinigung von Luft ausgestaltet ist und hierfür mindestens ein Filterelement aufweist.
